# EUROPÄISCHE PATENTSCHRIFT

(11) **EP 2 920 014 B1**
(45) Veröffentlichungstag und Bekanntmachung des Hinweises auf die Patenterteilung: **22.11.2017**
(21) Anmeldenummer: 13779174.5
(22) Anmeldetag: 10.10.2013
(51) Int. Cl.: B60K 6/48, B60K 6/365, B60K 6/387, B60W 10/113, B60W 10/02, B60W 10/06, B60W 10/08, B60W 20/00, F16H 3/00, F16H 3/72

(54) **VERFAHREN ZUM BETREIBEN EINER ANTRIEBSEINHEIT FÜR EIN HYBRIDFAHRZEUG**
METHOD FOR OPERATING A DRIVE UNIT FOR A HYBRID VEHICLE
PROCÉDÉ DE FONCTIONNEMENT D'UNE UNITÉ D'ENTRAINEMENT POUR UN VEHICULE HYBRIDE

(30) Priorität: 15.11.2012 DE 102012220828
(43) Veröffentlichungstag der Anmeldung: 23.09.2015
(73) Patentinhaber: ZF Friedrichshafen AG, 88046 Friedrichshafen (DE)
(72) Erfinder: KALTENBACH, Johannes, 88048 Friedrichshafen (DE); GRIESMEIER, Uwe, 88677 Markdorf (DE)
(86) Internationale Anmeldenummer: PCT/EP2013/071166
(87) Internationale Veröffentlichungsnummer: WO 2014/075853

(56) Entgegenhaltungen:
- DE-A1- 10 228 636
- DE-A1-102007 042 949
- DE-A1-102010 030 569
- DE-A1-102010 046 766
- DE-A1-102010 061 824

## Beschreibung

Die Erfindung betrifft ein Verfahren zum Betreiben einer Antriebseinheit für ein Hybridfahrzeug.

Aus der DE 10 2006 D59 591 A1 ist eine Antriebseinheit für ein Hybridfahrzeug bekannt, wobei die Antriebseinheit ein Antriebsaggregat mit einem Verbrennungsmotor und einer elektrischen Maschine und ein zwischen das Antriebsaggregat und einen Abtrieb geschaltetes Getriebe umfasst. Das Getriebe ist als Doppelkupplungsgetriebe ausgeführt und umfasst mehrere Teilgetriebe. Die elektrische Maschine des Antriebsaggregats der Antriebseinheit ist über ein Planetengetriebe an eine Eingangswelle eines ersten Teilgetriebes und eine Eingangswelle eines parallel zum ersten Teilgetriebe geschalteten zweiten Teilgetriebes gekoppelt. Der Verbrennungsmotor ist über eine reibschlüssige Trennkupplung an die Eingangswelle des ersten Teilgetriebes koppelbar und bei geschlossener Trennkupplung direkt an die Eingangswelle eines der Teilgetriebe gekoppelt.

Aus der DE 10 2010 061 824 A1 ist weitere Antriebseinheit für ein Hybridfahrzeug bekannt, wobei sich die Antriebseinheit der DE 10 2010 061 824 A1 von der Antriebseinheit der DE 10 2006 059 591 A1 dadurch unterscheidet, dass zusätzlich ein formschlüssiges Überbrückungsschaltelement vorhanden ist, welches mit dem Planetengetriebe derart zusammenwirkt, dass bei geschlossenem Überbrückungsschaltelement eine drehfeste Verbindung zwischen der elektrischen Maschine, der Eingangswelle des ersten Teilgetriebes und der Eingangswelle des zweiten Teilgetriebes besteht, wohingegen bei geöffnetem Überbrückungsschaltelement diese Verbindung zwischen der elektrischen Maschine und den beiden Eingangswellen der beiden Teilgetriebe nicht besteht.

Aus DE 10 2010 046 766 A1 ist ein Verfahren mit allen Merkmalen des Oberbegriffs von Anspruch 1 bekannt. Aus DE 10 2007 042 949 A1 und DE 102 28 636 A1 sowie DE 10 2010 030 569 A1 ist weiterer Stand der Technik bekannt.

Dann, wenn bei den aus dem Stand der Technik bekannten Antriebseinheiten eine Lastschaltung von einem Ist-Gang eines Teilgetriebes in einen Ziel-Gang eines anderen Teilgetriebes durchgeführt werden soll, kann es zu einem unerwünschten Einschaltstoß kommen, welcher als unkomfortabel empfunden wird.

Es besteht daher Bedarf an einem Verfahren zum Betreiben einer Antriebseinheit für ein Hybridfahrzeug, mit welchem bei der Ausführung von Lastschaltungen ein unkomfortabler Einschaltstoß sicher und zuverlässig vermieden werden kann.

Hiervon ausgehend liegt der vorliegenden Erfindung die Aufgabe zu Grunde, ein neuartiges Verfahren zum Betreiben einer Antriebseinheit für ein Hybridfahrzeug zu schaffen. Diese Aufgabe wird durch ein Verfahren gemäß Patentanspruch 1 gelöst. Erfindungsgemäß wird bei Ausführung einer Lastschaltung kurz vor dem Einlegen eines für die Lastschaltung zu schließenden, formschlüssigen Schaltelements zur Entkopplung der Trägheitsmasse des Verbrennungsmotors die reibschlüssige Trennkupplung in Schlupf gebracht.

Erfindungsgemäß wird vorgeschlagen, zur Ausführung einer Lastschaltung kurz vor dem Einlegen eines für die Lastschaltung zu schließenden, formschlüssigen Schaltelements die reibschlüssige Trennkupplung in Schlupf zu bringen, um so die Trägheitsmasse des Verbrennungsmotors zu entkoppeln. Dann, wenn der Ziel-Gang der auszuführenden Schaltung auf dem ersten Teilgetriebe liegt, über welches der Verbrennungsmotor bei geschlossenem reibschlüssigem Schaltelement direkt gekoppelt ist, erfolgt dies vor dem Einlegen des im ersten Teilgetriebe zu schließenden Schaltelements. Dann, wenn der Ziel-Gang der auszuführenden Lastschaltung auf dem zweiten Teilgetriebe liegt, an welchem der Verbrennungsmotor bei geschlossenem reibschlüssigem Schaltelement indirekt über das Planetengetriebe angekoppelt ist, erfolgt dies kurz vor dem Einlegen bzw. Schließen des Überbrückungsschaltelements. In jedem Fall kann die Trägheitsmasse des Verbrennungsmotors einschließlich eines Torsionsdämpfers bei der Ausführung einer Lastschaltung entkoppelt werden, wodurch es möglich ist, einen unkomfortablen Einschaltstoß zu vermeiden.

Nach einer Weiterbildung der Erfindung werden bei Ausführung der Lastschaltung weiterhin die Drehzahl des Verbrennungsmotors und/oder die Drehzahl der elektrischen Maschine vor dem Schlupfaufbau an der reibschlüssigen Trennkupplung derart eingestellt, dass bei beginnendem Schlupf an der reibschlüssigen Trennkupplung das für die Lastschaltung zu schließende, formschlüssige Schaltelement automatisch synchronisiert wird.

Im Zugbetrieb fällt die Drehzahl der Eingangswelle des ersten Teilgetriebes automatisch ab, wenn die Übertragungsfähigkeit der reibschlüssigen Trennkupplung verringert wird. Im Schubbetrieb steigt die Drehzahl der Eingangswelle des ersten Teilgetriebes automatisch an, wenn die Übertragungsfähigkeit der reibschlüssigen Trennkupplung verringert wird. Durch die Weiterbildung kann der Komfort bei der Ausführung einer Lastschaltung weiter gesteigert werden.

Dann, wenn das Überbrückungsschaltelement als formschlüssiges oder reibschlüssiges Überbrückungsschaltelement ausgebildet ist und wenn der Ist-Gang der auszuführenden Lastschaltung auf dem zweiten Teilgetriebe und der Ziel-Gang der auszuführenden Lastschaltung auf dem ersten Teilgetriebe liegt, an welches der Verbrennungsmotor bei geschlossener Trennkupplung direkt angebunden ist, werden zur Ausführung der Lastschaltung folgende Schritte durchgeführt:
a) zunächst wird durch Laständerung an dem Verbrennungsmotor und der elektrischen Maschine das geschlossene Überbrückungsschaltelement lastfrei gemacht und sodann lastfrei geöffnet;
b) anschließend wird über eine Drehzahländerung unter Last an dem Verbrennungsmotor und der elektrischen Maschine die Drehzahl der Eingangswelle des ersten Teilgetriebes in Richtung auf eine Synchrondrehzahl des Ziel-Gangs verändert;
c) darauffolgend wird durch Absenken der Übertragungsfähigkeit der reibschlüssigen Trennkupplung dieselbe in Schlupf gebracht;
d) anschließend wird bei synchronisiertem, für die Lastschaltung zu schließendem, formschlüssigem Schaltelement des ersten Teilgetriebes der Ziel-Gang eingelegt;
e) darauffolgend wird an der reibschlüssigen Trennkupplung der Schlupf abgebaut und dieselbe geschlossen;
f) anschließend erfolgt vorzugsweise eine Laständerung an dem Verbrennungsmotor und der elektrischen Maschine und der Ist-Gang des zweiten Teilgetriebes wird lastfrei ausgelegt.

Dann, wenn das Überbrückungsschaltelement als formschlüssiges Überbrückungsschaltelement ausgebildet ist und wenn der Ist-Gang der auszuführenden Lastschaltung auf dem ersten Teilgetriebe und der Ziel-Gang der auszuführenden Lastschaltung auf dem zweien Teilgetriebe liegt, an welches der Verbrennungsmotor bei geschlossener Trennkupplung indirekt über das Planetengetriebe angebunden ist, werden zur Ausführung der Lastschaltung folgende Schritte durchgeführt:
a) zunächst wird durch Laständerung an dem Verbrennungsmotor und der elektrischen Maschine das für die Lastschaltung auszulegende Schaltelement des ersten Teilgetriebes lastfrei gemacht und sodann lastfrei geöffnet;
b) anschließend wird über eine Drehzahländerung unter Last an dem Verbrennungsmotor und der elektrischen Maschine die Drehzahl der Eingangswelle des ersten Teilgetriebes in Richtung auf eine Synchrondrehzahl des Ziel-Gangs verändert;
c) darauffolgend wird durch Absenken der Übertragungsfähigkeit der reibschlüssigen Trennkupplung dieselbe in Schlupf gebracht;
d) anschließend wird bei synchronisiertem, formschlüssigem Überbrückungsschaltelement dasselbe geschlossen;
e) darauffolgend wird an der reibschlüssigen Trennkupplung der Schlupf abgebaut und dieselbe geschlossen;
f) anschließend erfolgt vorzugsweise eine Laständerung an dem Verbrennungsmotor und der elektrischen Maschine.

Beide obigen Schaltabläufe einer auszuführenden Lastschaltung sind automatisiert durchführbar. Unkomfortable Einschaltstöße können bei der Ausführung der jeweiligen Lastschaltung sicher und zuverlässig vermieden werden.

Bevorzugte Weiterbildungen ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein Schema einer ersten, erfindungsgemäß zu betreibenden Antriebseinheit für ein Hybridfahrzeug;
- Fig. 2: ein Schema einer zweiten, erfindungsgemäß zu betreibenden Antriebseinheit für ein Hybridfahrzeug;
- Fig. 3: ein Diagramm zur Verdeutlichung eines ersten erfindungsgemäßen Verfahrens zum Betreiben der Antriebseinheit gemäß Fig. 1 oder der Antriebseinheit gemäß Fig. 2; und
- Fig. 4: ein Diagramm zur Verdeutlichung eines zweiten erfindungsgemäßen Verfahrens zum Betreiben der Antriebseinheit gemäß Fig. 1.

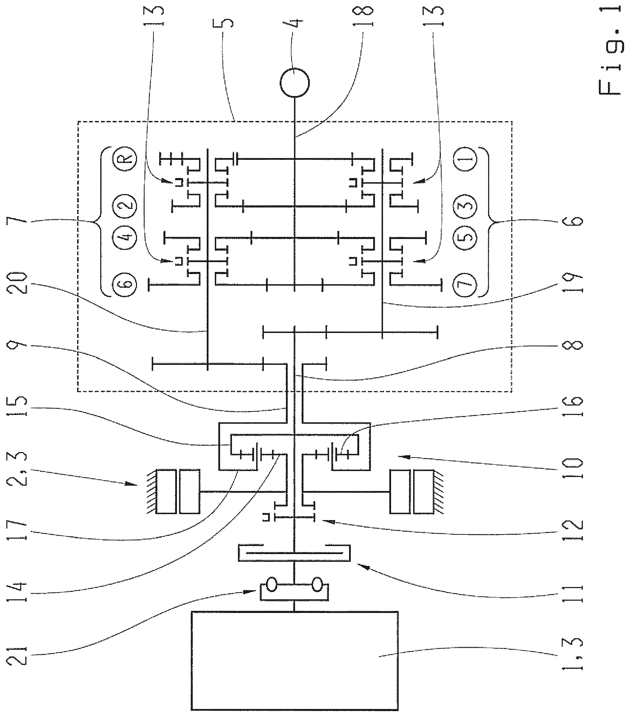

Fig. 1 zeigt ein Schema Antriebseinheit für ein Hybridfahrzeug. Die Antriebseinheit der Fig. 1 umfasst ein von einem Verbrennungsmotor 1 und einer elektrischen Maschine 2 gebildetes Antriebsaggregat 3, wobei zwischen das Antriebsaggregat 3 und einen Abtrieb 4 ein Getriebe 5 geschaltet ist. Das Getriebe 5 umfasst zwei Teilgetriebe 6 und 7, die sozusagen parallel zueinander geschaltet sind, wobei das erste Teilgetriebe 6 im gezeigten Ausführungsbeispiel die Vorwärtsgänge "1", "3", "5" und "7" bereitstellt, wohingegen das zweite Teilgetriebe 7 die Vorwärtsgänge "2", "4", "6" sowie den Rückwärtsgang "R" bereitstellt. Der in Fig. 1 gezeigte Radsatz der Teilgetriebe 6 und 7 und die gezeigte Aufteilung der Gänge auf dieselben ist exemplarischer Natur.

Zur Bereitstellung der Vorwärtsgänge sowie des Rückwärtsgangs umfassen die Teilgetriebe 6 und 7 des Getriebes 5 formschlüssige Schaltelemente 13, die auch als Gangschaltelemente bezeichnet werden. Der Aufbau und die Anordnung der Teilgetriebe 6 und 7 ist von Doppelkupplungsgetrieben bekannt und dem Fachmann geläufig.

Es sei lediglich darauf hingewiesen, dass jedes Teilgetriebe 6, 7 eine Eingangswelle 8, 9 umfasst, die abhängig vom Schaltzustand der Schaltelemente 13 selektiv über eine Ausgangswelle 18 mit dem Abtrieb 4 gekoppelt sind. Eine Eingangswelle 9 eines Teilgetriebes 7 ist als Hohlwelle ausgeführt, in welcher die andere Eingangswelle 8 des anderen Teilgetriebes 6 koaxial verläuft. Die Schaltelemente 13 der Teilgetriebe 6 und 7 sind Vorgelegewellen 19 und 20 der Teilgetriebe 6 und 7 zugeordnet.

Die elektrische Maschine 2 des Antriebsaggregats 3 greift an einer Eingangswelle 8 des ersten Teilgetriebes 6 und an einer Eingangswelle 9 des zweiten Teilgetriebes 7 über ein Planetengetriebe 10 an. An die Eingangswelle 8 des ersten Teilgetriebes 6 ist der Verbrennungsmotor 1 des Antriebsaggregats 3 über eine reibschlüssig Trennkupplung 11 direkt koppelbar, wobei bei geschlossener Trennkupplung 11 der Verbrennungsmotor 1 über das Platengetriebe 10 ferner an die Eingangswelle 9 des zweiten Teilgetriebes 7 indirekt gekoppelt ist.

Zwischen die reibschlüssige Trennkupplung 11 und den Verbrennungsmotor 1 ist ein Torsionsdämpfer 21 geschaltet.

Vom Planetengetriebe 10 sind in Fig. 1 ein Sonnenrad 14, ein Hohlrad 15, Planetenräder 16 sowie ein Steg bzw. Planetenträger 17 gezeigt. Der Planetenträger 17 greift an der Eingangswelle 9 des zweiten Teilgetriebes 7 an. Die elektrische Maschine 2 des Antriebsaggregats 3 ist an das Sonnenrad 14 des Planetengetriebes 10 gekoppelt. Der Verbrennungsmotor 1 ist bei geschlossener Trennkupplung 11 ebenso wie die Eingangswelle 8 des ersten Teilgetriebes 6 an das Hohlrad 15 gekoppelt. Die Anbindung von Verbrennungsmotor 1, elektrischer Maschine 2 und zweitem Teilgetriebe 7 am Planetengetriebe 10 kann auch von der in Fig. 1 gezeigten Variante abweichen. So kann zum Beispiel die elektrische Maschine 2 am Hohlrad 15 und der Verbrennungsmotor 1 bei geschlossener Trennkupplung 11 ebenso wie die Eingangswelle 8 des ersten Teilgetriebes 6 am Sonnenrad 14 angreifen. Der Verbrennungsmotor 1 und die Eingangswelle 8 des ersten Teilgetriebes 6 greifen bei geschlossener Trennkupplung 11 immer an demselben Element des Planetengetriebes 10 an.

Mit dem Planetengetriebe 10 wirkt ein Überbrückungsschaltelement 12 derart zusammen, dass bei geschlossenem Überbrückungsschaltelement 12 eine drehfeste Verbindung zwischen der elektrischen Maschine 2, der Eingangswelle 9 des zweiten Teilgetriebes 7 und der Eingangswelle 8 des ersten Teilgetriebes 6 und damit zwingende Drehzahlgleichheit zwischen denselben besteht, wohingegen bei geöffnetem Überbrückungsschaltelement 12 diese drehfeste Verbindung zwischen der elektrischen Maschine 2 und den beiden Eingangswellen 8, 9 der beiden Teilgetriebe 6, 7 und damit die zwingende Drehzahlgleichheit nicht besteht.

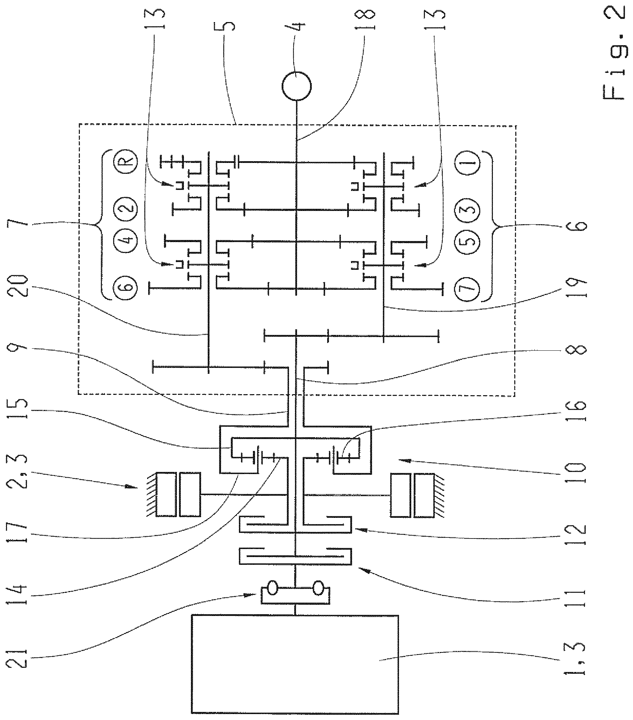

Beim Überbrückungsschaltelement 12 handelt es sich gemäß Fig. 1 um ein formschlüssiges Schaltelement. Fig. 2 zeigt eine Variante, in welcher das Überbrückungsschaltelement 12 als reibschlüssiges Schaltelement ausgeführt ist. Hinsichtlich aller übrigen Details stimmen Fig. 1 und 2 überein.

Die hier vorliegende Erfindung betrifft nun Verfahren, mit Hilfe deren bei Ausführung einer Lastschaltung bei den in Fig. 1 und 2 gezeigten Antriebseinheiten für ein Hybridfahrzeug Einschaltstöße sicher und zuverlässig vermeiden werden können.

Hierzu wird bei Ausführung der Lastschaltung kurz vor dem Einlegen eines für die Lastschaltung zu schließenden, formschlüssigen Schaltelements zur Entkopplung der Trägheitsmasse des Verbrennungsmotors 1 sowie des Torsionsdämpfer 21 die reibschlüssige Trennkupplung 11 in Schlupf gebracht.

Vorzugsweise wird vor dem Schlupfaufbau an der reibschlüssigen Trennkupplung 11 die Drehzahl des Verbrennungsmotors 1 und/oder die Drehzahl der elektrischen Maschine 2 so eingestellt, dass bei beginnendem Schlupf an der reibschlüssigen Kupplung 11 das für die Lastschaltung zu schließende, formschlüssige Schaltelement automatisch synchronisiert wird. Hiermit ist eine besondere komfortable, einschaltstoßfreie Lastschaltung durchführbar.

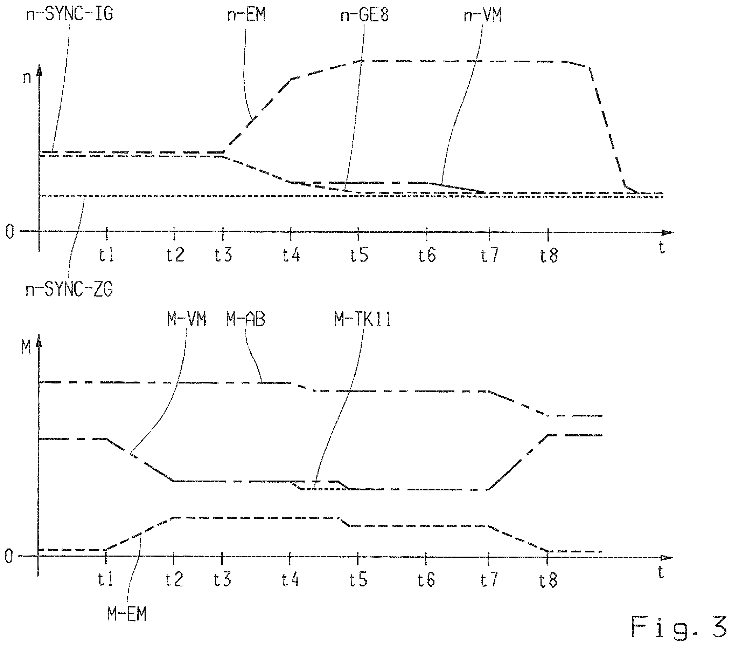

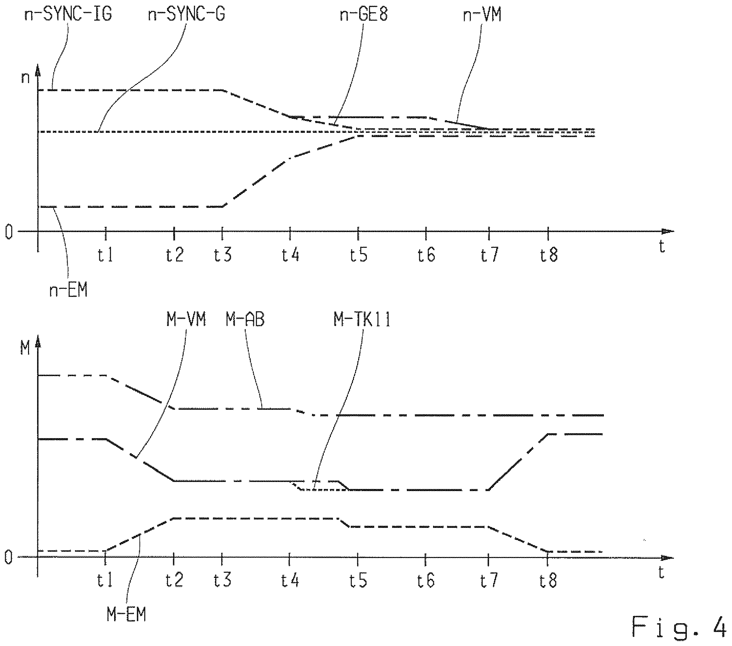

Weitere Details der Erfindung werden nachfolgend unter Bezugnahme auf die Diagramme der Fig. 3 und 4 beschrieben, wobei in den Diagrammen der Fig. 3 und 4 über der Zeit t jeweils zeitliche Verläufe von Momenten M und Drehzahlen n gezeigt sind.

So sind als zeitliche Momentverläufe das Moment M-EM der elektrischen Maschine 2, das Moment M-VM des Verbrennungsmotors 1, das am Abtrieb 4 wirkenden Moment M-AB sowie das von der reibschlüssigen Trennkupplung 11 übertragbaren Moment M-TK11 gezeigt. Als zeitliche Drehzahlverläufe n sind die Drehzahl n-EM der elektrischen Maschine 2, die Drehzahl n-VM des Verbrennungsmotors 1, die Synchrondrehzahl des Ist-Gangs n-SYNC-IG, die Synchrondrehzahl des Ziel-Gangs n-SYNC-ZG sowie die Drehzahl n-GE8 der Getriebeeingangswelle 8 des ersten Teilgetriebes 6 gezeigt.

Fig. 3 betrifft nun den Fall eines Lastschaltverfahrens, in welchem der Ist-Gang der auszuführenden Schaltung auf dem zweiten Teilgetriebe 7 und der Ziel-Gang der auszuführenden Lastschaltung auf dem ersten Teilgetriebe 6 liegt, wobei der Verbrennungsmotor 1 bei geschlossener Trennkupplung 11 direkt an die Eingangswelle 8 des ersten Teilgetriebes 6 angebunden ist.

Im Ausgangszustand des Lastschaltverfahrens der Fig. 3, also vor dem Zeitpunkt t1, ist demnach im zweiten Teilgetriebe 7 ein Gang eingelegt, das Überbrückungsschaltelement 12 sowie die Trennkupplung 11 sind jeweils geschlossen und das erste Teilgetriebe 6 befindet sich in Neutral. Es soll hierbei angenommen werden, dass während der gesamten Schaltung ein Fahrerwunschmoment und die Fahrgeschwindigkeit konstant bleiben. Die Synchrondrehzahlen n-SYNC beziehen sich auf die Drehzahl der Eingangswelle 8 des ersten Teilgetriebes 6, die sich einstellt, wenn der entsprechende Gang wirksam wäre. Vor dem Zeitpunkt t1 verfügen Verbrennungsmotor 1 und elektrische Maschine 2 über gleiche Drehzahlen n-EM und n-VM. Das Planetengetriebe 10 ist im Blockumlauf.

Zur Ausführung der Lastschaltung vom Ist-Gang des zweiten Teilgetriebes 7 auf den Ziel-Gang des ersten Teilgetriebes 6 erfolgt zunächst zwischen den Zeitpunkten t1 und t2 eine Laständerung der Momente M-VM und M-EM an dem Verbrennungsmotor 1 und der elektrischen Maschine 2, nämlich derart, dass das geschlossene Überbrückungsschaltelement 12 lastfrei gemacht und demnach lastfrei wird. Hierbei wird das am Abtrieb wirksame Moment M-AB konstant gehalten. Anschließend zwischen den Zeitpunkten t2 und t3 das nunmehr lastfreie Überbrückungsschaltelement 12 lastfrei geöffnet wird.

Darauffolgend wird zwischen den Zeitpunkten t3 und t4 die Drehzahl n-EM der elektrischen Maschine 2 und die Drehzahl n-VM des Verbrennungsmotors 1 unter Last derart angepasst, dass die Drehzahl n-GE 8 der Eingangswelle 8 des ersten Teilgetriebes 6 auf die Synchrondrehzahl n-SYNC-ZG des einzulegenden Ziel-Gangs verändert wird. Im Zugbetrieb ist, wie in Fig. 3 dargestellt, diese Drehzahl n-GE 8 der Eingangswelle 8 des ersten Teilgetriebes 6 oberhalb der Synchrondrehzahl n-SYNC-ZG des einzulegenden Ziel-Gangs. Im Schubbetrieb wäre hingegen die Drehzahl n-GE 8 unterhalb der Synchrondrehzahl n-SYNC-ZG des Ziel-Gangs.

Nach der obigen Anpassung der Drehzahlen von elektrischer Maschine 2 und Verbrennungsmotor 1 wird zwischen den Zeitpunkten t4 und t5 die Übertragungsfähigkeit der reibschlüssigen Trennkupplung 11 abgesenkt, nämlich solange, bis sich an der Trennkupplung 11 ein Schlupf aufbaut. Hierbei sinkt dann die Drehzahl n-GE 8 der Eingangswelle 8 des ersten Teilgetriebes 1 ab, da die reibschlüssige Kupplung 11 nunmehr weniger Moment überträgt. Diese Drehzahländerung der Drehzahl n-GE 8 in Richtung auf die Synchrondrehzahl n-SYNC-ZG erfolgt automatisch. Die Drehzahl n-VM des Verbrennungsmotors 1 wird in etwa konstant gehalten, um zu verhindern, dass die Drehzahl des Verbrennungsmotors 1 ansteigt, wobei dies durch Absenkung des Moments M-VM des Verbrennungsmotors 1 erfolgt.

Anschließend wird zwischen den Zeitpunkten t5 und t6 bei synchronisiertem, für die Lastschaltung zu schließendem, formschlüssigem Schaltelement bzw. Gangschaltelement 13 des ersten Teilgetriebes 6 der Ziel-Gang im ersten Teilgetriebe 6 eingelegt. Da sich die reibschlüssige Trennkupplung 11 im Schlupf befindet, ist die Trägheitsmasse des Verbrennungsmotors 1 sowie des Torsionsdämpfers 21 entkoppelt und das Einlegen des Ziel-Gangs erfolgt komfortabel und bauteilschonend ohne Einschaltstoß. An der reibschlüssigen Kupplung 11 wird nur wenig Wärme erzeugt, da die Differenzdrehzahl an der Kupplung 11 gering ist.

Darauffolgend wird zwischen den Zeitpunkten t6 und t7 die reibschlüssige Kupplung 11 geschlossen, indem an derselben Schlupf abgebaut wird. Dies kann durch Erhöhung des übertragbaren Moments an der reibschlüssigen Kupplung 11 oder durch Absenkung des vom Verbrennungsmotor 1 bereitgestellten Moments M-VM erfolgen.

Anschließend erfolgt eine Laständerung am Verbrennungsmotor 1 und an der elektrischen Maschine 3, nämlich durch Erhöhung vom Verbrennungsmotor 1 bereitgestellten Moments M-VM und durch Absenken des von der elektrischen Maschine 2 bereitgestellten Moments M-EM, wobei nach dem Zeitpunkt t8 im zweiten Teilgetriebe 7 der Ist-Gang lastfrei ausgelegt wird. Ferner erfolgt nach dem Zeitpunkt t8 eine Synchronisation der Drehzahl der elektrischen Maschine 2 an die Drehzahl des Verbrennungsmotors 1, wobei sich dann das Planetengetriebe 10 im Blockumlauf befindet, wobei dann nachfolgend das Überbrückungsschaltelement 12 geschlossen wird.

Das unter Bezugnahme auf Fig. 3 beschriebene Verfahren dient demnach der Ausführung einer Lastschaltung von einem Ist-Gang des zweiten Teilgetriebes 7 auf einen Ziel-Gang des ersten Teilgetriebes 6, wobei Fig. 3 dies exemplarisch für eine Zug-Hoch-Schaltung zeigt.

Das Verfahren der Fig. 3 kann sowohl bei der Antriebseinheit der Fig. 1, wie auch bei der Antriebseinheit der Fig. 2 zum Einsatz kommen, also dann, wenn das Überbrückungsschaltelement 12 als formschlüssiges oder als reibschlüssiges Überbrückungsschaltelement ausgeführt ist.

Eine weitere Ausprägung des erfindungsgemäßen Verfahrens wird nachfolgend unter Bezugnahme auf Fig. 4 beschrieben, wobei Fig. 4 eine Lastschaltung von einem Ist-Gang des ersten Teilgetriebes 6 auf einen Ziel-Gang des zweiten Teilgetriebes 7 betrifft, nämlich wiederum für den Fall einer Zug-Hoch-Schaltung. Das Verfahren der Fig. 4 ist nur für die Antriebseinheit der Fig. 1 relevant, in welcher das Überbrückungsschaltelement 12 als formschlüssiges Überbrückungsschaltelement ausgeführt ist.

In Fig. 4 soll demnach eine Lastschaltung von einem Ist-Gang des ersten Teilgetriebes 6 auf einen Ziel-Gang des zweiten Teilgetriebes 7 ausgeführt werden, wobei der Verbrennungsmotor 1 bei geschlossener reibschlüssiger Trennkupplung 11 über das Planetengetriebe 10 indirekt an das zweite Teilgetriebe 7 angebunden ist. Vor dem Zeitpunkt t1 wird über den Verbrennungsmotor 1 bei im ersten Teilgetriebe 6 eingelegten Ist-Gang gefahren, wobei das Überbrückungsschaltelement 12 geöffnet ist und im zweiten Teilgetriebe 7 bereits der Ziel-Gang der auszuführenden Lastschaltung durch Synchronisation mit der elektrischen Maschine 2 lastfrei eingelegt wurde. Die Synchrondrehzahlen n-SYNC-IG und n-SYNC-SG beziehen sich wiederum auf die Drehzahl an der Eingangswelle 8 des ersten Teilgetriebes 6, die sich einstellt, wenn der entsprechende Gang wirksam wäre.

Zwischen den Zeitpunkten t1 und t2 erfolgt zunächst eine Laständerung am Verbrennungsmotor 1 und an der elektrischen Maschine 2, hier durch Absenken des Moments M-MV des Verbrennungsmotors 1 und durch Anheben des Moments M-EM der elektrischen Maschine 2, wodurch das auszulegende Schaltelement 13 im ersten Teilgetriebe 6 lastfrei wird.

Nachfolgend wird zwischen den Zeitpunkten t2 und t3 das auszulegende Schaltelement 13 im ersten Teilgetriebe 6 lastfrei ausgelegt bzw. geöffnet.

Anschließend erfolgt zwischen den Zeitpunkten t3 und t4 eine Anpassung der Drehzahlen n-EM und n-VM von elektrischer Maschine 2 und Verbrennungsmotor 1 unter Last, nämlich derart, dass die Drehzahl n-GE8 der Eingangswelle 8 des ersten Teilgetriebes 6 der Synchrondrehzahl n-SYNC-ZG des einzulegenden Ziel-Gangs angenähert wird. Im Zugbetrieb befindet sich diese Drehzahl n-GE8 der Eingangswelle 8 des ersten Teilgetriebes 6 oberhalb der Synchrondrehzahl n-SYNC-ZG des Ziel-Gangs, wie dies in Fig. 4 dargestellt ist. Im Schubbetrieb würde die Drehzahl n-GE 8 unterhalb der Synchrondrehzahl n-SYNC-ZG liegen.

Darauffolgend erfolgt zwischen den Zeitpunkten t4 und t5 eine Absenkung der Übertragungsfähigkeit der reibschlüssigen Trennkupplung 11, nämlich solange, bis sich an derselben ein Schlupf ausbildet. Hierbei sinkt die Drehzahl n-GE8 der Eingangswelle 8 des ersten Teilgetriebes 6 ab, da nun die reibschlüssige Trennkupplung 11 weniger Moment überträgt. Die Drehzahl n-VM des Verbrennungsmotors 1 wird in etwa konstant gehalten, und zwar durch Absenkung des vom Verbrennungsmotor 1 bereitgestellten Moments M-VM, um zu verhindern, dass die Drehzahl n-VM des Verbrennungsmotors 1 ansteigt.

Anschließend wird zwischen den Zeitpunkten t5 und t6 bei Synchronbedingungen am für die Lastschaltung einzulegenden Überbrückungsschaltelement 12 das Überbrückungsschaltelement 12 geschlossen bzw. eingelegt. Da sich die reibschlüssige Trennkupplung 11 im Schlupf befindet, ist die Trägheitsmasse des Verbrennungsmotors 1 sowie des Torsionsdämpfers 21 abgekoppelt und das Überbrücken des Planetengetriebes 10 durch das Überbrückungsschaltelement 12 erfolgt komfortabel und bauteilschonend ohne Einschaltstoß. An der Trennkupplung 11 fällt nur geringe Wärme an, da die Differenzdrehzahl an derselben gering ist.

Darauffolgend wird zwischen den Zeitpunkten t6 und t7 die Trennkupplung 11 geschlossen. Dies kann durch Erhöhung des von derselben übertragbaren Moments oder durch Absenkung des Moments M-VM des Verbrennungsmotors 1 erfolgen.

Zwischen den Zeitpunkten t7 und t8 erfolgt nachfolgend eine Laständerung an dem Verbrennungsmotor 1 und der elektrischen Maschine 3, nämlich gemäß Fig. 4 eine Erhöhung des vom Verbrennungsmotor 1 bereitgestellten Moments M-VM und eine Absenkung des von der elektrischen Maschine bereitgestellten Moments M-EM.

Zu den Zeitdiagrammen der Fig. 3 und 4 sei angemerkt, dass bei sämtlichen Drehmoment-Verläufen solche Drehmomente der Einfachheit halber nicht gezeigt wurden, welche für Drehzahländerungen aufgrund von Trägheitsmassen erforderlich sind.

### Bezugszeichen

- 1: Verbrennungsmotor
- 2: elektrische Maschine
- 3: Antriebsaggregat
- 4: Abtrieb
- 5: Getriebe
- 6: Teilgetriebe
- 7: Teilgetriebe
- 8: Eingangswelle
- 9: Eingangswelle
- 10: Platengetriebe
- 11: Trennkupplung
- 12: Überbrückungsschaltelement
- 13: Schaltelement
- 14: Sonnerad
- 15: Hohlrad
- 16: Platenrad
- 17: Platenträger
- 18: Ausgangswelle
- 19: Vorgelegewelle
- 20: Vorgelegewelle
- 21: Torsionsdämpfer

## Patentansprüche

1. Verfahren zum Betreiben einer Antriebseinheit für ein Hybridfahrzeug, wobei die Antriebseinheit ein Antriebsaggregat (3) mit einem Verbrennungsmotor (1) und einer elektrischen Maschine (2) und ein zwischen das Antriebsaggregat (3) und einen Abtrieb (4) geschaltetes, mehrere Teilgetriebe (6, 7) aufweisendes Getriebe (5) umfasst, wobei die elektrische Maschine (2) über ein Planentengetriebe (10) an eine Eingangswelle (8) eines ersten Teilgetriebes (6) und eine Eingangswelle (9) eines parallel zum ersten Teilgetriebe (6) geschalteten zweiten Teilgetriebes (7) gekoppelt ist, wobei der Verbrennungsmotor (1) über eine reibschlüssige Trennkupplung (11) an die Eingangswelle (8) des ersten Teilgetriebes (6) koppelbar und bei geschlossener Trennkupplung (11) zusammen mit der Eingangsweile (8) des ersten Teilgetriebes (6) an dasselbe Element (15) des Planentengetriebes (10) gekoppelt ist, und wobei mit dem Planetengetriebe (10) ein formschlüssiges oder reibschlüssiges Überbrückungsschaltelement (12) derart zusammenwirkt, dass bei geschlossenem Überbrückungsschaltelement (12) eine drehfeste Verbindung zwischen der elektrischen Maschine (2), der Eingangswelle (8) des ersten Teilgetriebes (6) und der Eingangswelle (9) des zweiten Teilgetriebes (7) und damit zwingende Drehzahlgleichheit zwischen denselben besteht, wohingegen bei geöffnetem Überbrückungsschaltelement (12) diese drehfeste Verbindung zwischen der elektrischen Maschine (2) und den beiden Eingangswellen (8, 9) der beiden Teilgetriebe (6, 7) und damit die zwingende Drehzahlgleichheit nicht besteht, **dadurch gekennzeichnet, dass** bei Ausführung einer Lastschaltung kurz vor dem Einlegen eines für die Lastschaltung zu schließenden, formschlüssigen Schaltelements zur Entkopplung der Trägheitsmasse des Verbrennungsmotors (1) die reibschlüssige Trennkupplung (11) in Schlupf gebracht wird.

2. Verfahren nach Anspruch 1, **dadurch gekennzeichnet, dass** dann, wenn das Überbrückungsschaltelement (12) als formschlüssiges oder reibschlüssiges Überbrückungsschaltelement (12) ausgebildet ist und wenn der Ist-Gang der auszuführenden Lastschaltung auf dem zweiten Teilgetriebe (7) und der Ziel-Gang der auszuführenden Lastschaltung auf dem ersten Teilgetriebe (6) liegt, an welches der Verbrennungsmotor (1) bei geschlossener Trennkupplung (11) direkt angebunden ist, zur Ausführung der Lastschaltung folgende Schritte durchgeführt werden:
a) zunächst wird durch Laständerung an dem Verbrennungsmotor (1) und der elektrischen Maschine (3) das geschlossene Überbrückungsschaltelement (12) lastfrei gemacht und sodann lastfrei geöffnet;
b) anschließend wird über eine Drehzahländerung unter Last an dem Verbrennungsmotor (1) und der elektrischen Maschine (3) die Drehzahl der Eingangswelle (8) des ersten Teilgetriebes (6) in Richtung auf eine Synchrondrehzahl des Ziel-Gangs verändert;
c) darauffolgend wird durch Absenken der Übertragungsfähigkeit der reibschlüssigen Trennkupplung (11) dieselbe in Schlupf gebracht;
d) anschließend wird bei synchronisiertem, für die Lastschaltung zu schließendem, formschlüssigem Schaltelement (13) des ersten Teilgetriebes (6) der Ziel-Gang eingelegt;
e) darauffolgend wird an der reibschlüssigen Trennkupplung (11) der Schlupf abgebaut und dieselbe geschlossen;
f) anschließend erfolgt vorzugsweise eine Laständerung an dem Verbrennungsmotor (1) und der elektrischen Maschine (3) und der Ist-Gang des zweiten Teilgetriebes (7) wird lastfrei ausgelegt.

3. Verfahren nach Anspruch 2, **dadurch gekennzeichnet, dass** zur Laständerung in Schritt a) unter Konstanthaltung des am Abtrieb (4) wirksamen Moments an dem Verbrennungsmotor (1) Last abgebaut und der elektrischen Maschine (3) Last aufgebaut wird.

4. Verfahren nach Anspruch 2 oder 3, **dadurch gekennzeichnet, dass** in Schritt c) durch Absenken der Last am dem Verbrennungsmotor (1) die Drehzahl desselben in etwa konstant gehalten wird.

5. Verfahren nach einem der Ansprüche 2 bis 4, **dadurch gekennzeichnet, dass** zur Laständerung in Schritt f) an dem Verbrennungsmotor (1) Last aufgebaut und der elektrischen Maschine (3) Last abgebaut wird, wobei anschließend nach dem lastfreien Ausgelegen des Ist-Gangs des zweiten Teilgetriebes (7) die Drehzahl der elektrischem Maschine (2) und die Drehzahl des Verbrennungsmotors (1) synchronisiert und dann das Überbrückungsschaltelement (12) geschlossen wird.

6. Verfahren nach Anspruch 1, **dadurch gekennzeichnet, dass** dann, wenn das Überbrückungsschaltefement (12) als formschlüssiges Überbrückungsschaltelement (12) ausgebildet ist, dann wenn der Ist-Gang der auszuführenden Lastschaltung auf dem ersten Teilgetriebe (6) und der Ziel-Gang der auszuführenden Lastschaltung auf dem zweien Teilgetriebe (7) liegt, an welches der Verbrennungsmotor (1) bei geschlossener Trennkupplung (11) indirekt über das Planetengetriebe (10) angebunden ist, und dann, wenn das Überbrückungsschaltelement (12) geöffnet und im zweiten Teilgetriebes (7) der Ziel-Gang durch Synchronisieren mit der elektrischen Maschine (2) lastfrei einlegt wurde, zur Ausführung der Lastschaltung folgende Schritte durchgeführt werden:
a) zunächst wird durch Laständerung an dem Verbrennungsmotor (1) und der elektrischen Maschine (3) das für die Lastschaltung auszulegende Schaltelement (13) des ersten Teilgetriebes (6) lastfrei gemacht und sodann lastfrei geöffnet;
b) anschließend wird über eine Drehzahländerung unter Last an dem Verbrennungsmotor (1) und der elektrischen Maschine (3) die Drehzahl der Eingangswelle (8) des ersten Teilgetriebes (6) in Richtung auf eine Synchrondrehzahl des Ziel-Gangs verändert;
c) darauffolgend wird durch Absenken der Übertragungsfähigkeit der reibschlüssigen Trennkupplung (11) dieselbe in Schlupf gebracht;
d) anschließend wird bei synchronisiertem, formschlüssigem Überbrückungsschaltelement (12) dasselbe geschlossen;
e) darauffolgend wird an der reibschlüssigen Trennkupplung (11) der Schlupf abgebaut und dieselbe geschlossen;
f) anschließend erfolgt vorzugsweise eine Laständerung an dem Verbrennungsmotor (1) und der elektrischen Maschine (3).

7. Verfahren nach Anspruch 6, **dadurch gekennzeichnet, dass** in Schritt a) das am Abtrieb wirksamen Moments konstant gehalten wird.

## Claims

1. Method for operating a drive unit for a hybrid vehicle, wherein the drive unit comprises a drive assembly (3) with an internal combustion engine (1) and an electric machine (2) and a transmission (5) which is connected between the drive assembly (3) and an output (4) and has a plurality of part transmissions (6, 7), wherein the electric machine (2) is coupled via a planetary gear mechanism (10) to an input shaft (8) of a first part transmission (6) and an input shaft (9) of a second part transmission (7) which is connected in parallel with the first part transmission (6), wherein the internal combustion engine (1) can be coupled to the input shaft (8) of the first part transmission (6) via a frictionally locking clutch (11), and when the clutch (11) is closed said internal combustion engine (1) is coupled together with the input shaft (8) of the first part transmission (6) to the same element (15) of the planetary gear mechanism (10), and wherein a positively locking or frictionally locking lock-up shift element (12) interacts with the planetary gear mechanism (10) in such a way that when the lock-up shift element (12) is closed a rotationally fixed connection is present between the electric machine (2), the input shaft (8) of the first part transmission (6) and the input shaft (9) of the second part transmission (7) and therefore there is obligatory equality of rotational speed between these, whereas when the lock-up shift element (12) is opened this rotationally fixed connection is not present between the electric machine (2) and the two input shafts (8, 9) of the two part transmissions (6, 7) and therefore the obligatory equality of rotational speed is not present, **characterized in that** when a load shift is executed just before the engagement of a positively locking shift element, which is to be closed for the load shift, the frictionally locking clutch (11) is placed in a slipping state in order to decouple the mass inertia of the internal combustion engine (1).

2. Method according to Claim 1, **characterized in that** when the lock-up shift element (12) is embodied as a positively locking or frictionally locking lock-up shift element (12) and when the actual gear speed of the load shift which is to be executed is on the second part transmission (7), and the target gear speed of the load shift which is to be executed is on the first part transmission (6), to which the internal combustion engine (1) is directly connected when the clutch (11) is closed, the following steps are carried out in order to execute the load shift:
a) firstly the closed lock-up shift element (12) is made load-free by changing the load at the internal combustion engine (1) and the electric machine (3), and is then opened in a load-free state;
b) subsequently the rotational speed of the input shaft (8) of the first part transmission (6) is changed in the direction of a synchronous rotational speed of the target gear speed by changing the rotational speed under load at the internal combustion engine (1) and the electric machine (3);
c) after this the frictionally locking clutch (11) is placed in a slipping state by reducing the transmission capability of said clutch (11);
d) subsequently the target gear speed is engaged when the positively locking shift element (13), to be closed for the load shift, of the first part transmission (6) is synchronized;
e) after this the slip is reduced at the frictionally locking clutch (11) and said clutch (11) is closed; and
f) subsequently a load change at the internal combustion engine (1) and the electric machine (3) preferably takes place and the actual gear speed of the second part transmission (7) is disengaged in a load-free state.

3. Method according to Claim 2, **characterized in that** in order to change the load in step a), load is reduced at the internal combustion engine (1) and load is increased at the electric machine (3) while keeping the torque which is effective at the output (4) constant.

4. Method according to Claim 2 or 3, **characterized in that** in step c) the rotational speed of the internal combustion engine (1) is kept approximately constant by lowering the load at the internal combustion engine (1).

5. Method according to one of Claims 2 to 4, **characterized in that** in order to change the load in step f), load is increased at the internal combustion engine (1) and load is reduced at the electric machine (3), wherein subsequently, after the load-free disengagement of the actual gear speed of the second part transmission (7), the rotational speed of the electric machine (2) and the rotational speed of the internal combustion engine (1) are synchronized, and the lock-up shift element (12) is then closed.

6. Method according to Claim 1, **characterized in that** when the lock-up shift element (12) is embodied as a positively locking lock-up shift element (12), when the actual gear speed of the load shift which is to be executed is on the first part transmission (6) and the target gear speed of the load shift which is to be executed is on the second part transmission (7), to which the internal combustion engine (1) is connected indirectly via the planetary gear mechanism (10) when the clutch (11) is closed, and when the lock-up shift element (12) has been opened and the target gear speed has been engaged in a load-free state in the second part transmission (7) by synchronizing with the electric machine (2), the following steps are carried out in order to execute the load shift:
a) firstly the shift element (13), which is to be disengaged for the load shift, of the first part transmission (6) is made load-free by changing the load at the internal combustion engine (1) and the electric machine (3), and is then opened in a load-free state;
b) subsequently the rotational speed of the input shaft (8) of the first part transmission (6) is changed in the direction of a synchronous rotational speed of the target gear speed by changing the rotational speed under load at the internal combustion engine (1) and the electric machine (3);
c) after this the frictionally locking clutch (11) is placed in a slipping state by reducing the transmission capability of said clutch (11);
d) subsequently the positively locking lock-up shift element (12) is closed when said lock-up shift element (12) is synchronized;
e) after this the slip is reduced at the frictionally locking clutch (11), and said clutch (11) is closed;
f) subsequently a load change preferably takes place at the internal combustion engine (1) and the electric machine (3).

7. Method according to Claim 6, **characterized in that** in step a) the torque which is effective at the output is kept constant.

## Revendications

1. Procédé de conduite d'une unité d'entraînement pour véhicule hybride, l'unité d'entraînement comportant un ensemble d'entraînement (3) qui présente un moteur (1) à combustion interne, une machine électrique (2) et une transmission (5) présentant plusieurs transmissions partielles (6, 7) entre l'ensemble d'entraînement (3) et un ensemble entraîné (4),
la machine électrique (2) étant accouplée par l'intermédiaire d'une transmission (10) à planétaires à une arbre d'entrée (8) d'une première transmission partielle (6) et un arbre d'entrée (9) d'une deuxième transmission partielle (7) étant accouplé en parallèle à la première transmission partielle (6),
le moteur (1) à combustion interne étant accouplé par un embrayage de séparation (11) à frottement à l'arbre d'entrée (8) de la première transmission partielle (6) et, lorsque l'embrayage de séparation (11) est fermé, étant accouplé conjointement avec l'arbre d'entrée (8) de la première transmission partielle (6) au même élément (15) de la transmission (10) à planétaires,
un élément (12) de changement de rapport de pontage coopérant en correspondance géométrique ou par frottement avec la transmission (10) à planétaires, de telle sorte que lorsque l'élément (12) de changement de rapport de pontage est fermé, une liaison à rotation solidaire est établie entre la machine électrique (2) et l'arbre d'entrée (8) de la première transmission partielle (6) et l'arbre d'entrée (9) de la deuxième transmission partielle (7) et ainsi une égalité forcée des vitesses de rotation est établie alors que lorsque l'élément (12) de changement de rapport de pontage est fermé, cette liaison à rotation solidaire entre la machine électrique (2) et les deux arbres d'entrée (8, 9) des deux transmissions partielles (6, 7) est absente et donc l'égalité forcée des vitesses de rotation n'est pas établie,
**caractérisé en ce que**
lors de l'exécution d'un changement de rapport en charge, peu avant l'engagement d'un élément en correspondance géométrique de changement de rapport qui doit être fermé pour le changement de rapport en charge, l'embrayage de séparation (11) à frottement est mis en patinage pour désaccoupler la masse d'inertie du moteur (1) à combustion interne.

2. Procédé selon la revendication 1, **caractérisé en ce que** lorsque l'élément (12) de changement de rapport de pontage est configuré comme élément (12) de changement de rapport de pontage en correspondance géométrique ou par frottement et lorsque le rapport de transmission en cours du changement de rapport à exécuter en charge est engagé sur la deuxième transmission partielle (7) et le rapport de transmission visé du changement de rapport à exécuter en charge est engagé sur la première transmission partielle (6) sur laquelle le moteur (1) à combustion interne est raccordé directement lorsque l'embrayage de séparation (11) est fermé, les étapes suivantes sont exécutées pour exécuter le changement de rapport en charge :
a) tout d'abord, pour modifier la charge appliquée sur le moteur (1) à combustion interne et la machine électrique (3), l'élément (12) de changement de rapport de pontage fermé est délesté de sa charge et ensuite ouvert à l'état délesté,
b) ensuite, par une modification de la vitesse de rotation en charge du moteur (1) à combustion interne et de la machine électrique (3), la vitesse de rotation de l'arbre d'entrée (8) de la première transmission partielle (6) est modifiée en direction d'une vitesse de rotation synchrone avec le rapport de transmission visé,
c) ensuite, par abaissement de la capacité de transfert de l'embrayage de séparation (11) par frottement, ce dernier est amené en patinage,
d) ensuite, lorsque l'élément (13) en correspondance géométrique de changement de rapport de la première transmission partielle (6), qui doit être fermé pour le changement de rapport en charge et qui a été synchronisé, le rapport de transmission visé est engagé,
e) ensuite, le patinage sur l'embrayage de séparation (11) par frottement est supprimé et cet embrayage est fermé et
f) ensuite, la charge est de préférence modifiée sur le moteur (1) à combustion interne et la machine électrique (3) et le rapport de transmission en cours de la deuxième transmission partielle (7) est désengagé hors charge.

3. Procédé selon la revendication 2, **caractérisé en ce que** pour la modification de la charge à l'étape a) tout en maintenant constant le couple qui agit sur l'ensemble entraîné (4), le moteur (1) à combustion interne est délesté de sa charge et la charge est appliquée sur la machine électrique (3).

4. Procédé selon les revendications 2 ou 3, **caractérisé en ce qu'**à l'étape c), par abaissement de la charge du moteur (1) à combustion interne, la vitesse de rotation de ce dernier est maintenue sensiblement constante.

5. Procédé selon l'une des revendications 2 à 4, **caractérisé en ce que** pour modifier la charge à l'étape f), le moteur (1) à combustion interne est délesté de sa charge et la charge est appliquée sur la machine électrique (3), et ensuite, après désengagement hors charge du rapport de transmission en cours de la deuxième transmission partielle (7), la vitesse de rotation de la machine électrique (2) et la vitesse de rotation du moteur (1) à combustion interne sont synchronisées et l'élément (12) de changement de rapport de pontage est ensuite fermé.

6. Procédé selon la revendication 1, **caractérisé en ce que** lorsque l'élément (12) de changement de rapport de pontage est configuré comme élément (12) de changement de rapport de pontage en correspondance géométrique, lorsque le rapport de transmission en cours du changement de rapport à exécuter en charge sur la première transmission partielle (6) et le rapport de transmission visé de changement de rapport à exécuter en charge est engagé sur la deuxième transmission partielle (7) sur laquelle le moteur (1) à combustion interne est relié indirectement par l'intermédiaire de la transmission (10) à planétaires lorsque l'embrayage de séparation (11) est fermé et que l'élément (12) de changement de rapport de pontage est ouvert et dans la deuxième transmission partielle (7), le rapport de transmission visé a été engagé hors charge par synchronisation avec la machine électrique (2), les étapes suivantes sont exécutées pour réaliser le changement de rapport en charge :
a) tout d'abord, par modification de la charge appliquée sur le moteur (1) à combustion interne et la machine électrique (3), l'élément (13) de changement de rapport de la première transmission partielle (6), qui doit être engagé pour le changement de rapport en charge est délesté et ensuite ouvert hors charge,
b) ensuite, par modification de la vitesse de rotation en charge du moteur (1) à combustion interne et de la machine électrique (3), la vitesse de rotation de l'arbre d'entrée (8) de la première transmission partielle (6) est modifiée en direction d'une vitesse de rotation de synchronisation du rapport de transmission visé,
c) ensuite, par abaissement de la capacité de transfert de l'embrayage de séparation (11) par frottement, ce dernier est mis en patinage,
d) ensuite, lorsque l'élément (12) de changement de rapport de pontage en correspondance géométrique a été synchronisé, il est fermé,
e) ensuite, le patinage est supprimé sur l'embrayage de séparation (11) par frottement et ce dernier est fermé et
f) ensuite, une modification de charge a de préférence lieu sur le moteur (1) à combustion interne et sur la machine électrique (3).

7. Procédé selon la revendication 6, **caractérisé en ce qu'**à l'étape a), le couple appliqué sur l'ensemble entraîné est maintenu constant.
